# EUROPEAN PATENT APPLICATION

(11) **EP 2 985 086 A1**
(43) Date of publication of application: **17.02.2016**
(21) Application number: 14783512.8
(22) Date of filing: 11.04.2014
(51) Int. Cl.: B06B 1/16

(54) **VIBRATING DEVICE COMPRISING TWO CONCENTRIC ROTATING SHAFTS WITH RESPECTIVE ECCENTRIC MASSES, WHICH ROTATE IN OPPOSITE DIRECTIONS, AND A SUPPORTING STRUCTURE INCLUDING A BASE AND TWO INDEPENDENT LUBRICATED CAVITIES**

(30) Priority: 12.04.2013 CL 2013001014
(71) Applicant: Vulco S.A., Santiago (CL)
(72) Inventor: RADDEMACHER, Marcelo, San Bernardo Santiago (CL)
(74) Representative: Dauncey, Mark Peter
(86) International application number: PCT/CL2014/000016
(87) International publication number: WO 2014/166008

(57) **Abstract**

The invention relates to a vibrating device (1) that comprises: a supporting structure (2); a first rotating shaft (3) rotatably connected to the supporting structure (2) and having a first eccentric mass (4) secured thereto; and a second rotating shaft (5) rotatably connected to the supporting structure (2) and having a second eccentric mass (6) secured thereto, wherein the first (3) and second (5) shafts are concentric and rotate in opposite directions. The device is light in weight, has adjustable masses and can be coupled to other devices of the same type. Moreover, the device is characterized in that the supporting structure (2) comprises a base (7) and two independent lubricated cavities (8a, 8b) and a plurality of elongate elements (9) that connect the lubricated cavities (8a, 8b) to the base (7).

## Description

### BACKGROUND TO THE INVENTION

The present invention is related with a vibrating device to be used, preferably, in screens for processing minerals.

A screen, when used in mineral processing, is a vibrating machine that induces acceleration of the mineral through a vibrating movement with a defined amplitude for the purpose of stratification (classification or cleaning) or separating it from the fluid in which it is suspended (dewatering).

The vibrating force (generated by the vibrating device) that stimulates the screen should eliminate the inertia of the masses as much for the screen as the mineral (being processed), and consequently if the mass of the screen and the mineral are substantial, the force and energy required to move them will be greater.

On the other hand, the mineral extraction with increasingly lower mineral grade demands higher tonnage of the mineral, which requires screens of great size.

This implies that a single screen (of larger size) requires multiple vibrating devices (that can induce a greater force and energy), being that in the screen industry there are only between six and eight vibrating devices, with the following problem of weight and space.

In effect, a large quantity of vibrating devices (installed on the same screen) occupy a significant space and possess an elevated mass, all of which complicated the design of the screens of large size and reduces the efficiency of the same.

Due to the aforementioned, there exists a need in the vibrating device industry, for vibrating screens that are light, compact and that allow for a connection with other vibrating devices of the same type (in order to achieve a coordinated operation between themselves).

### SUMMARIZED DESCRIPTION OF THE INVENTION

The present invention is related with a vibrating device to be used, preferably, in screens for mineral processing that resolve the problems in Prior Art.

To do this, the present invention reveals a vibrating device that comprises two concentric rotating shafts, which rotate in opposite directions, a supporting structure that comprises a base, two independent lubricated cavities and a plurality of elongated elements that connect the lubricated cavities with the base, which defines a very resistant configuration, which is lightweight and easy to maintain.

Furthermore, it reveals the use of modifiable eccentric masses, which is achieved due to the same comprising a principal component, which allows easy regulation of the force and energy generated by the device.

Additionally, in a preferred embodiment, all of the supports or ball bearings that support the identical shafts, which allows for reduced inventory of replacement parts and facilitates maintenance labor.

On the other hand, it reveals the use of a forced self-lubrication device to achieve a very efficient lubrication of the moveable components.

Finally, it reveals a use for connection means on the ends of the rotating shafts of the vibrating device, which allows the connection of the vibrating device with other identical devices and/or with a traction unit.

### DESCRIPTION OF THE DRAWINGS

Figure 1 shows a cross-sectional view of the preferred embodiment of the vibrating device of the invention.
Figure 2 shows an amplified view of the lubrication device of a preferred embodiment of the vibrating device of the invention.
Figure 3 shows a perspective view of the preferred embodiment of the vibrating device of the invention where the independent lubricated cavities are open (uncovered).
Figure 4 shows a perspective view of a preferred embodiment of the vibrating device of the invention where the device is idle (with the masses detained and hanging downward).
Figure 5 shows a perspective view of a preferred embodiment of the vibrating device of the invention where the device is shown in motion (with the masses rotating in opposite directions).
Figure 6 shows a perspective view of a preferred embodiment of the vibrating device of the invention where stated elongated elements (9) comprise four lengthened beams (two connected to an independent lubricated cavity and the other two connected to another independent lubricated cavity).

### DESCRIPTION OF THE PREFERRED EMBODIMENT OF THE INVENTION

The present invention is related with a vibrating device to be used, preferably, in screens for mineral processing.

Said vibrating device (1) comprises a supporting structure (2), a first rotating shaft (3) rotatably connected to the supporting structure (2) and having a first eccentric mass (4) secured thereto; and a second rotating shaft (5), which may be pre-deformed, rotatably connected to the supporting structure (2) and having a second eccentric mass (6) secured thereto, wherein the first (3) and the second (5) shafts are concentric and rotate in opposite directions. The device is light in weight, has adjustable masses and can be coupled to other devices of the same type. Moreover, the device is characterized in that the supporting structure (2) comprises a base (7) and two independent lubricated cavities (8a, 8b) and a plurality of elongated elements (9) that connect the lubricated cavities (8a, 8b) to the base (7).

On the interior of each lubricated cavity (8a, 8b) a support or ball bearing (10a) is arranged that connects the first shaft (3) with the supporting structure (2) and a support or ball bearing (10b) that connects the second shaft (5) with the supporting structure (2). Preferably, all of the supports or ball bearings (10a, 10b) are identical.

On the interior of the lubricated cavities (8a, 8b), at least one bevel gear (11), of the helical type, that mechanically connects to the first gear (12) secured to the first shaft, with a second gear (13) secured to a second shaft (5). This said, at least bevel gear (11) may include a plurality of ball bearings angularly evenly spaced.

At least one of the said bevel gears (11) is mechanically connected with a forced self-lubrication device (14), in a manner such as to transmit movement to itself.

This forced self-lubrication device (14) may comprise an oil recirculation pump (15) and preferably is defined as an independent set and is separable from the rest of the vibrating device (1), in such a manner as to facilitate its replacement when necessary.

Each of the lubricated cavities (8a, 8b) is defined by two halves separated between each other by means of a horizontal plane that includes the rotating shaft from each of the rotating shafts (3, 5), all of which considerably facilitates the maintenance and replacement of parts of the device of the invention.

The eccentric masses (4, 6) may comprise a principal component (4a, 6a) firmly fixed to the respective shaft (3, 5), and a secondary component (4b, 6b), that is fixed to the principal component (4a, 6a), by means of removable coupling means, where said removable coupling means comprise bolts and nuts.

The principal component (4a, 6a) includes a flange (16) that, in conjunction with the removable coupling means, prevents the secondary component (4b, 6b) from being able to radially displace, with respect to the pivot axis.

The first eccentric mass (4) may be located between the two independent lubricated cavities (8a, 8b) and the second eccentric mass (6) may comprise two independent masses between which the two independent lubricated cavities (8a, 8b) are arranged.

The ends of the second rotatory shaft may include connection means (17) that allows the connection from the vibrating device with other identical devices and/or with a traction unit.

Between the first (12) and the second (13) gear are located discs (18) (preferably, polymeric discs) that separate the rotating shafts (3 and 5).

The forced self-lubrication device (14) may comprise filters and coolers that reduce the possibility of contamination and increase the service life of the lubricant and the lubricated components.

The forced self-lubrication device (14) may comprise an external deposit that allows the lubricant to be changed with the equipment in operation and facilitating maintenance.

The self-lubrication device may comprise flow sensors to generate alarms when there is a lubrication deficiency.

The vibrating device may comprise an interior shaft with only one diameter that reduces the mechanized necessity, diminishing cost and machine hours.

The ball bearings of the shafts may rest in the supporting structure and not on the other shaft, which reduces the relative rotational velocity, increasing the service life of the ball bearing.

Said elongated elements (9) may comprise four lengthened beams, which allow for a very robust structural configuration.

The second rotational shaft (5) may be pre-deformed in a manner such that only the forces that it exerts upon itself, during the operation of the vibrating device (1), inversely deform it in a way that counteracts said pre-deformation and allows it to attain a straight geometry. This embodiment allows significant reduction in the weight of the second rotatory shaft (5), which furthermore allows a significant reduction in cost.

The essential features of the aforementioned invention ascribe to the same the following advantages with respect to Prior Art:
Very compact size allows it to occupy little space in the screen.

Light weight improves the effective centrifugal force and facilitates maintenance and transport.

Efficient counterweight design allows increased centrifugal force with less weight.

Adjustable counterweight design allows for regulation of centrifugal force by means of reducing (or increasing) the mass.

Concentric shafts allow lightweight counterweight of large eccentricity.

Helical ball bearings allow inversion of the rotational direction of the shafts, transferring a large potential with a very low acoustic emission.

Multiple satellite ball bearings (that connect the associated gears to each shaft) allowing reduction of angular free play between gears.

Multiple satellite ball bearings (that connect the associated gears to each shaft) allow sharing the force simultaneously along various points of contact, which makes the uses of small gears possible.

Lubricated cavities include separated casings that facilitate its maintenance.

Forced lubrication system includes individual oil pump incorporated into one of the satellite gears, which notably improve lubrication.

Forced self-lubrication system focuses lubrication on the components of interest and reduces that quantity of lubricant required within the casings.

Forced self-lubrication system allows the incorporation of filters and coolers, which reduce the possibility of contamination and increases the service life of the lubricant and the lubricated components.

Forced self-lubrication system receives external deposit, which allows changing the lubricant with the equipment in operation and facilitates maintenance.

Forced self-lubrication system receives flow sensors to generate alarms when there is a lubricant deficit.

Polymeric discs axially fix the rotatory shafts, which reduce friction, the deterioration of lubricant, the required space and the mass of the system.

Independent lubricated cavities only contain lubricant in the zone of ball bearings and gears, which allow them to be joined to the anchoring base by means of elongated elements or planes, resulting in a very efficient structure in terms of weight, size and resistance.

Counterweights are not in contact with the lubricant, which avoids impact of the counterweights against the lubricant and reduces the loss by viscous rub and deterioration of the lubricant.

Same sized ball bearings or supports, gears, seals and polymeric discs facilitate the control of inventory and simplify maintenance labor.

Sets of independent and separable satellite gears facilitate their replacement, maintenance and installation.

Ends of the shafts with bridles allow as much a connection with cardan shafts as flexible coupling to be connected to a motor or other vibrating devices.

Interior shaft of only one diameter reduces the need for machining, diminishing cost and machine hours.

Shafts rest on rotators of special spherical rollers for vibrating applications.

Ball bearings of the shafts rest on the supporting structure and not on the other shaft to reduce the relative rotational velocity, increasing the service life of the ball bearing.

## Claims

1. Vibrating device (1), **CHARACTERIZED in that** it comprises a supporting structure (2); a first rotating shaft (3) rotatably connected to the supporting structure (2) and having a first eccentric mass (4) secured thereto; and a second rotating shaft (5), which may be pre-deformed, and a second rotating shaft (5) rotatably connected to the supporting structure (2) and having a second eccentric mass (6) secured thereto, wherein the first (3) and the second (5) shafts are concentric and rotate in opposite directions; said device has adjustable masses and can be coupled to other devices of the same type; moreover, the device is **characterized in that** the supporting structure (2) comprises a base (7) and two independent lubricated cavities (8a, 8b) and a plurality of elongated elements (9) that connect the lubricated cavities (8a, 8b) to the base (7).

2. Vibrating device (1) according to claim 1, **CHARACTERIZED in that** on the interior of each lubricated cavity (8a, 8b) a support or ball bearing (10a) is arranged that connects the first shaft (3) with the supporting structure (2) and a support or ball bearing (10b) that connects the second shaft (5) with the supporting structure (2).

3. Vibrating device (1) according to claim 2, **CHARACTERIZED in that** all of the breaks or ball bearings (10a, 10b) are identical.

4. Vibrating device (1) according to claim 1, **CHARACTERIZED in that** on the interior of the lubricated cavities (8a, 8b), at least one bevel gear (11) is arranged that mechanically connects to the first gear (12) secured to the first shaft, with a second gear (13) secured to a second shaft.

5. Vibrating device (1) according to claim 4, **CHARACTERIZED in that** at least one said bevel gear (11) corresponds to a plurality of ball bearings angularly evenly spaced.

6. Vibrating device (1) according to claim 4, **CHARACTERIZED in that** at least one of the said bevel gears (11) is mechanically connected with a forced self-lubrication device (14), in a manner such as to transmit movement to itself.

7. Vibrating device (1) according to claim 6, **CHARACTERIZED in that** the forced self-lubrication device (14) comprises an oil recirculation pump.

8. Vibrating device (1) according to claim 6, **CHARACTERIZED in that** that the forced self-lubrication device (14) is defined as an independent set and is separable from the rest of the vibrating device (1), in such a manner as to facilitate its replacement when necessary.

9. Vibrating device (1) according to claim 5, **CHARACTERIZED in that** the ball bearings are helical.

10. vibrating device (1) according to claim 4, **CHARACTERIZED in that** each of the lubricated cavities (8a, 8b) is defined by two halves separated between each other by means of a horizontal plane that includes the rotating shaft from each of the rotating shafts (3, 5).

11. Vibrating device (1) according to claim 1, **CHARACTERIZED in that** the eccentric masses (4, 6) comprise a principal component (4a, 6a) firmly fixed to the respective shaft (3, 5), and a secondary component (4b, 6b), that is fixed to the principal component (4a, 6a), by means of removable coupling means.

12. Vibrating device (1) according to claim 11, **CHARACTERIZED in that** said removable coupling means comprise bolts and nuts.

13. Vibrating device (1) according to claim 11, **CHARACTERIZED in that** the principal component (4a, 6a) includes a flange (16) that, in conjunction with the removable coupling means, prevents the secondary component (4b, 6b) from being able to radially displace, with respect to the pivot axis.

14. Vibrating device (1) according to claim 1, **CHARACTERIZED in that** the first eccentric mass (4) is located between the two independent lubricated cavities (8a, 8b) and because the second eccentric mass (6) comprises two independent masses between which the two independent lubricated cavities (8a, 8b) are arranged.

15. Vibrating device (1) according to claim 1, **CHARACTERIZED in that** the ends of the second rotatory axis include a connection means (17) that allows the connection from the vibrating device with other identical devices and/or with a traction unit.

16. Vibrating device (1) according to claim 4, **CHARACTERIZED in that** between the first (12) and the second (13) gear are located the discs (18) that separate the rotating shafts (3 and 5).

17. Vibrating device (1) according to claim 6, **CHARACTERIZED in that** the forced self-lubrication device (14) comprises filters and coolers that reduce the possibility of contamination and increases the service life of the lubricant and the lubricated components.

18. Vibrating device (1) according to claim 6, **CHARACTERIZED in that** the forced self-lubrication device (14) comprises an external deposit that allows the lubricant to be changed with the equipment in operation and facilitating maintenance.

19. Vibrating device (1) according to claim 6, **CHARACTERIZED in that** the self-lubrication device comprises flow sensors to generate alarms when there is a lubrication deficiency.

20. Vibrating device (1) according to claim 1, **CHARACTERIZED in that** an interior shaft with only one diameter that reduces the mechanized necessity, diminishing cost and machine hours.

21. Vibrating device (1) according to claim 2, **CHARACTERIZED in that** the ball bearings of the shafts rest in the supporting structure and not on the other shaft, which reduces the relative rotational velocity, increasing the service life of the ball bearing.

22. Vibrating device (1) according to claim 1, **CHARACTERIZED in that** said elongated elements (9) comprise four lengthened beams.

23. Vibrating device (1) according to claim 1, **CHARACTERIZED in that** the second rotational shaft (5) is pre-deformed in a manner such that only the forces that exerted upon itself, during the operation of the vibrating device (1), inversely deform it in a way that counteracts said pre-deformation and allows it to attain a straight geometry.
